# EUROPEAN PATENT APPLICATION

(11) **EP 2 128 656 A2**
(43) Date of publication of application: **02.12.2009**
(21) Application number: 09161158.2
(22) Date of filing: 26.05.2009
(51) Int. Cl.: G01W 1/00

(54) **Maritime Climate Information System and Method for collecting and processing maritime climate information**

(30) Priority: 30.05.2008 TW 97120316
(71) Applicant: Su, Hsin-Chi, Songshan District Taipei City 105 (TW)
(72) Inventor: Su, Hsin-Chi, Songshan District Taipei City 105 (TW)
(74) Representative: Hüttermann, Aloys

(57) **Abstract**

The present invention discloses a maritime climate information system and a method for collecting and processing the maritime climate information. The system is **characterized in that** the detecting device, the positioning device and the first maritime wireless network device are disposed on the first maritime vehicle, and respectively used to detect the climate information around the first maritime vehicle, and calculate the coordinate of the first maritime vehicle and transmit the climate information and the coordinate. Through the maritime network structure formed by the second maritime wireless network devices disposed on the second maritime vehicles, the operating interface of each maritime vehicle of this system receives the climate information and the coordinate, and displays an electronic map on which the climate information is displayed. By using this method, this system can provide more accurate and immediate maritime climate information.

## Description

### FIELD OF THE INVENTION

The present invention relates to a maritime climate information system and a method for collecting and processing the maritime climate information, particularly to the technical field of using the maritime network to collect and process the maritime climate information.

### BACKGROUND OF THE INVENTION

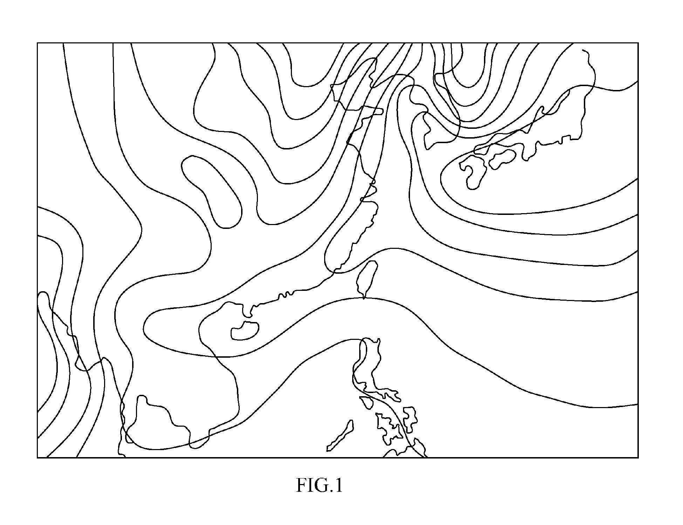

Maritime climate information is important reference data when planning Ocean route. However, as for the available meteorology information at present, the on-land meteorology information and coastal meteorology information are relatively exhaustive, and there are only regional marine meteorological radio facsimile charts for the maritime climate information, such as marine meteorological radio facsimile charts of the JMH channel in Japan, marine meteorological radio facsimile charts of the BMF channel in Taiwan, marine meteorological radio facsimile charts of the KLL channel in Korea, or maritime meteorology tables for reference. Figure 1 illustrates a marine meteorological radio facsimile chart. Users can read and explain the distribution state of isobar on the marine meteorological radio facsimile chart, and then judge the wind direction and the possible wind velocity and wave height according to the isobaric chart.

Because the said conventional maritime climate information is detected by the satellite, and then analyzed by the on-land meteorology station, it takes longer time to collect and process the conventional maritime climate information. Thus, users used to get marine meteorological radio facsimile charts or maritime meteorology tables that contain data out of time. Furthermore, the sufficient experience is required when analyzing the data. The user without sufficient experience can't extrapolate the maritime meteorology state well by explaining marine meteorological radio facsimile charts or maritime meteorology tables.

Besides, because of the limitation of the bandwidth of transmission frequency, the conventional maritime climate information is mostly static material or data.

The marine navigation is getting more and more frequent, and the marine climate is changeable. Therefore, how to provide immediate and intuitional maritime climate information is an urgent problem to be solved.

### SUMMARY OF THE INVENTION

Therefore, the objective of the present invention is to provide a maritime climate information system and a method for collecting and processing the maritime climate information, so as to provide more accurate, immediate maritime climate information.

To achieve the foregoing objective, the present invention provides a maritime climate information system comprising a detecting device, a positioning device, a first maritime wireless network device and a plurality of second maritime wireless network devices. The detecting device is disposed on the first maritime vehicle to detect the climate information around the first maritime vehicle. The positioning device is disposed on the first maritime vehicle to calculate the location and coordinate of the first maritime vehicle. The first maritime wireless network device is disposed on the first maritime vehicle to transmit its climate information and coordinate. These second maritime wireless network devices are respectively disposed on each second maritime vehicle, and are respectively wirelessly connected to the first maritime wireless network device to receive the said climate information and coordinate. Preferably, at least one of the second maritime wireless network devices comprises a first operating interface for displaying a local electronic map around the coordinate and the climate information is displayed on the local electronic map.

Preferably, the second maritime wireless network devices can be further connected to at least one on-land wireless network device, and the second maritime wireless network devices transmit the said climate information and coordinate to the on-land wireless network device.

Preferably, the maritime information system can further comprise a climate information platform which has a connection with the on-land wireless network devices, and receives the above-mentioned climate information and coordinate. The climate information platform has a second operating interface to display a global electronic map, and the climate information at the coordinate is displayed on the global electronic map.

Besides, the present invention further provides a method for collecting and processing the maritime climate information, comprising the following steps. First, a detecting device and a positioning device of the first maritime vehicle are used to detect the climate information around the first maritime vehicle, and calculate the coordinate of the first maritime vehicle respectively. Second, at least one of the second maritime wireless network devices of the second maritime vehicle and the first maritime wireless network device of the first maritime vehicle are wirelessly connected. The present invention receives the climate information and the coordinate by the connection of these maritime wireless network devices.

The method for collecting and processing the maritime climate information of the present invention further comprises a step of using a first operating interface of the second maritime wireless network device to display a local electronic map, and the climate information is displayed on the local electronic map.

The method for collecting and processing the maritime climate information of the present invention further comprises a step of wirelessly connecting the second wireless network device to at least one on-land wireless network device, and transmitting the said climate information and the coordinate to the on-land wireless network device.

The method for collecting and processing the maritime climate information of the present invention further comprises a step of connecting a climate information platform to each of the on-land wireless network device for receiving the said climate information and coordinate. The climate information platform comprises a second operating interface for displaying a global electronic map, and the climate information at the coordinate is displayed on the global electronic map.

### BRIEF DESCRIPTION OF THE DRAWINGS

The subject matter regarded as the invention is particularly pointed out and distinctly claimed in the concluding portion of the specification. The invention, both as to the system and method of the operation, together with features and advantages thereof may best be understood by reference to the following detailed description with the accompanying drawings in which:
Figure 1 is an isobaric chart;
Figure 2 is a block diagram of a maritime climate information system according to a first embodiment of the present invention.
Figure 3 is a schematic diagram of a maritime climate information system according to the first embodiment of the present invention.
Figure 4 is a block diagram of the maritime climate information system according to a second embodiment of the present invention.
Figure 5 is a schematic diagram of the maritime climate information system according to the second embodiment of the present invention.
Figure 6 is a schematic diagram of displaying a global electronic map on an operating interface according to the present invention;
Figure 7 is another schematic diagram of displaying a global electronic map on an operating interface according to the present invention;
Figure 8 is a flow chart of a method for collecting and processing the maritime information according to a first embodiment of the present invention; and
Figure 9 is a flow chart of a method for collecting and processing the maritime information according to a second embodiment of the present invention.

### DETAILED DESCRIPTION OF THE PREFERRED EMBODIMENTS

The present invention relates to a maritime climate information system and a method for collecting and processing the maritime climate information. While the specifications describe at least one embodiment of the invention considered best modes of practicing the invention, it should be understood that the invention can be implemented in many ways and is not limited to the particular examples described below or to the particular manner in which any features of such examples are implemented.

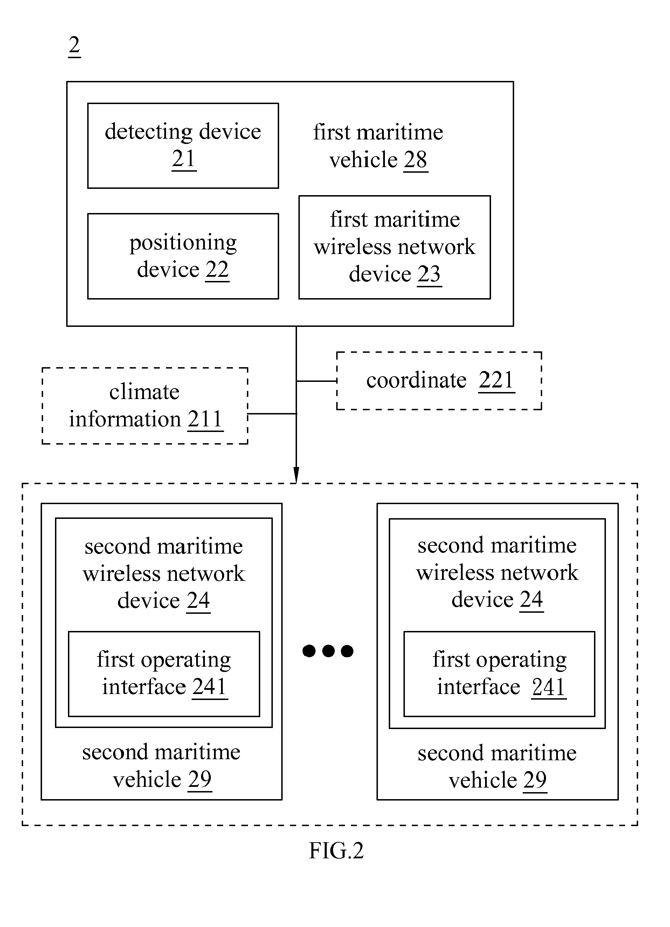

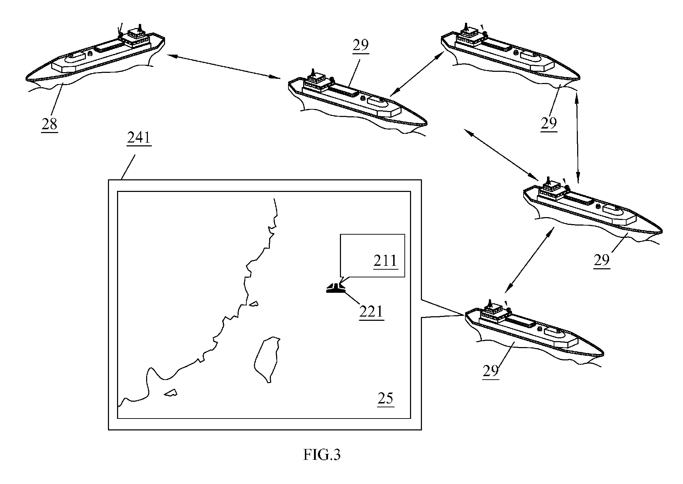

Referring to Figure 2 and Figure 3 respectively for a block diagram and schematic diagram of a maritime climate information system according to a first embodiment of the present invention, the maritime climate information system 2 comprises a detecting device 21, a positioning device 22, a first maritime wireless network device 23, and a plurality of second maritime wireless network devices 24. The detecting device 21 is disposed on a first maritime vehicle 28 for detecting climate information 211 around the first maritime vehicle 28. The detecting device 21 is preferred to be a camera for catching a sea image or sky image around the first maritime vehicle 28; or a meteorograph for measuring the wind velocity, wind direction, temperature or atmospheric pressure around the first maritime vehicle 28; or any electronic device which can measure/catch physical quantity of climate information or maritime environment information and convert the physical quantity or information into electronic signals.

Positioning device 22 is disposed on the first maritime vehicle 28 to calculate a coordinate 221 of the first maritime vehicle 28. Preferably, the positioning device 22 can be a GPS device which receives satellite signals from at least three positioning satellites, and calculating the longitude data and latitude data of the GPS device itself according to these satellite signals. Therefore, if the GPS device is fixed on the first maritime vehicle 28, then the calculated longitude data and latitude data can be regarded as the longitude data and latitude data of the first maritime vehicle 28.

The first maritime wireless device 23 is disposed on the first maritime vehicle 28, and used for transmitting the climate information 211 and coordinate 221. These second maritime wireless network devices 24 are respectively disposed on a plurality of second maritime vehicles 29, and are respectively wirelessly connected to the first maritime wireless device 23 to receive the climate information 211 and coordinate 221. Besides, at least a second maritime wireless network device 24 has a first operating interface 241 for displaying a local electronic map 25 around coordinate 221. The climate information 211 can be displayed at the position corresponding to the coordinate 221 on the local electronic map 25. Figure 3 illustrates the ocean area at the east north of Taiwan where the first maritime vehicle 28 is located, and the climate information 211 containing climate images is displayed at the coordinate 221.

Preferably, the first maritime vehicle 28 or the second maritime vehicle 29 can be a ship, a maritime platform or a floating maritime structure. Preferably, the maritime wireless device comprises an antenna module, a plurality of circuit modules for receiving and transmitting signals, and a switch. The antenna module can be a directional antenna, an Omni-directional antenna, or a combination of both. The operation band of these antennas can cover 5175 MHz∼5875 MHz, for example, the antenna for WiFi communication, but this is just an example, not for limitation. The circuit module receiving and transmitting signals can be an access point (AP). The switch can be a data link layer switch, also called a second layer switch. The wireless signals transmission between the first maritime wireless network device 23 and the second maritime wireless network device 24 is operated with a wireless communication protocol, such as a WiFi communication protocol, a WiMAX communication protocol, a VHF communication protocol, or a UHF communication protocol.

Besides, the first maritime wireless network device 23 and second maritime wireless network device 24 can transmit wireless data to each other with Real Time Protocol (RTP) if necessary, so as to ensure that the climate information 211 which is displayed by the first operatinginterface 241 is instant.

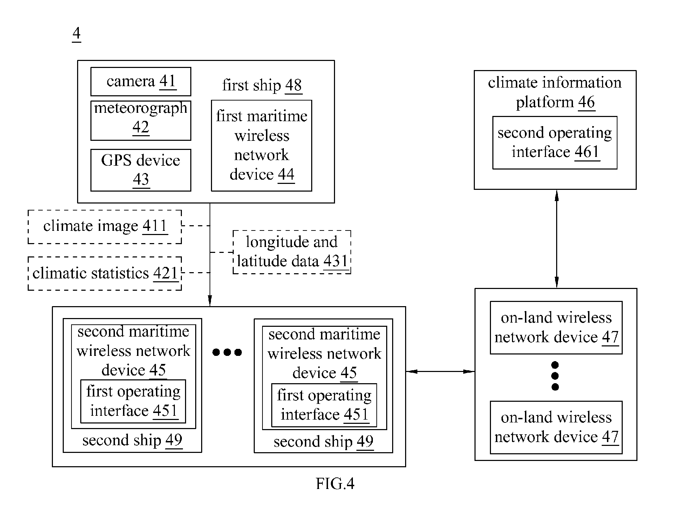

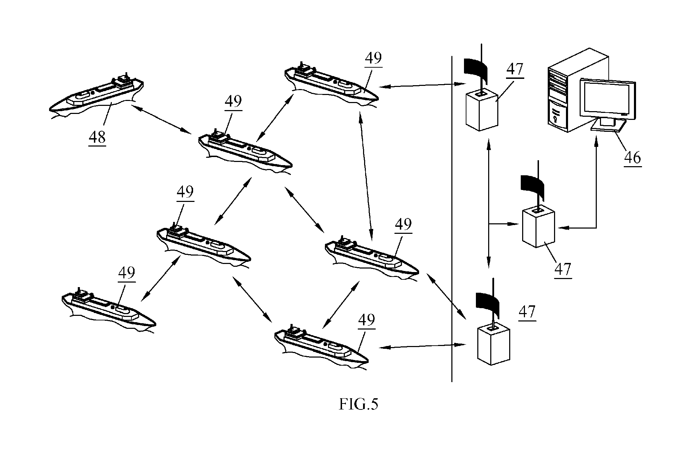

Figure 4 and Figure 5 are respectively a block diagram and a schematic diagram of a maritime climate information system according to a second embodiment of the present invention. The maritime climate information system 4 comprises a camera 41, a meteorograph 42, a GPS device 43, a first maritime wireless network 44, a plurality of second maritime wireless devices 45 and a climate information platform 46. The camera 41, the meteorograph 42, the GPS device 43, and the first maritime wireless network 44 are disposed on a first ship 48. The camera 41 is used to capture the climate image 411, such as a sea image or sky image around the first ship 48. The meteorograph 42 is used to measure the climatic statistics 421, such as the wind velocity, wind direction, temperature or atmospheric pressure around the first ship 48. The GPS device 43 receives the signals of the positioning satellite to calculate the current longitude and latitude data 431 of the location of the first ship 48.

A plurality of second maritime wireless network devices 45 are respectively disposed on a plurality of second ships 49. The first maritime wireless network device 44 is wirelessly connected to at least one second maritime wireless device 45 to form a maritime network structure. Furthermore, these second maritime wireless devices 45 are also connected to at least one on-land wireless network device 47 and transmit the climate image 411, the measured climatic statistics 421 and longitude and latitude data 431 to every on-land wireless network device 47. Besides, at least one second maritime wireless network device 45 can further comprise a first operating interface 451 for displaying a local electronic map around the coordinate of the first ship 48, and the climate image 411 around the coordinate of the first ship 48 can be displayed on local electronic map.

The climate information platform 46 may have a connection with every on-land wireless network device 47 via the Internet or intranet for receiving climate image 411, climatic statistics 421 and longitude data and latitude data 431. Besides, the climate information platform 46 comprises a second operating interface 461 for displaying a global electronic map 462, and climate image 411 and climatic statistics 421 are displayed at the location of longitude data and latitude data 431 on global electronic map 462.

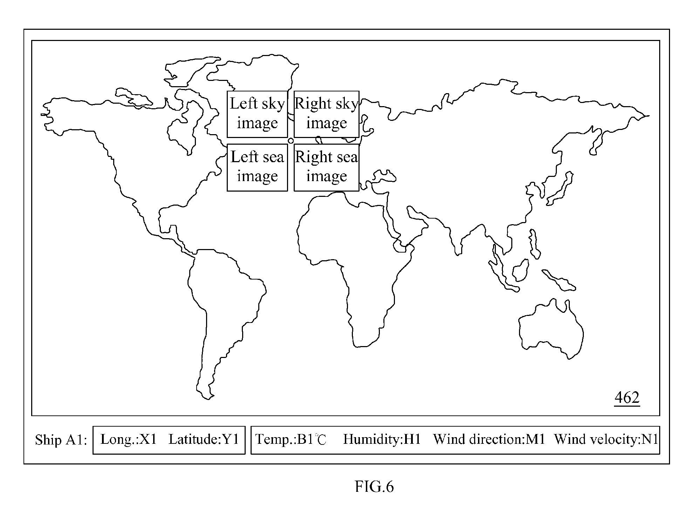

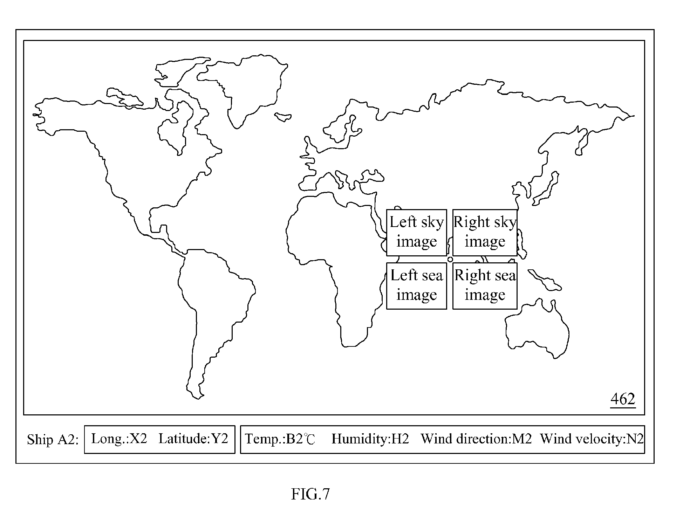

Figure 6 and Figure 7 are schematic diagrams which illustrate respectively an example of a second operating interface 461 displaying a global electronic map. The user can select a ship to be observed. The second operating interface 461 displays the climate images around the ship A1 at the place corresponding to the longitude and latitude of the location of the ship A1. For example, in Figure 6, the displayed ship A1 is located on North Atlantic Ocean. In Figure 7, while the displayed ship A2 is located on Indian Ocean. Thus, the climate images are displayed on the corresponding location, so that users can observe maritime climate more intuitionally. The more cameras are disposed on the ship, the more climate images are displayed by the climate information platform 46. In Figure 6 and Figure 7, four cameras are disposed on the ship for capturing the images of sky on the right of the ship and on the left of the ship, and images of sea on the right of the ship and on the left of the ship. Besides, the second operating interface 461 also displays received climatic statistics, such as the temperature, humidity, wind direction, and wind velocity of the surroundings near the ship, and so on.

The climate information platform 46 can be a webpage server. Users can operate a networking device to connect to this webpage server via the Internet. Thus, the user can operate the second operating interface 461 and observe the climate information on the browser. Besides, the wireless signal transmission between the first maritime wireless network device 44 and second maritime wireless network device 45, and between the second maritime wireless network device 45 and on-land wireless network device 47 can be operated with Real Time Protocol if necessary, so as to ensure that the climate image 411 and climatic statistics 421 which are displayed by the second interface 461 are instant.

By such maritime climate information system 4, the climate image 411 and climatic statistics 421 at the places sailed by the first ship 48 can be all transmitted to the climate information platform 46. If a plurality of ships 48 sail on most of the global channels, the maritime climate information system 4 can collect the climate information on these channels effectively, and the collected maritime climate information can nearly cover all ocean area of the whole world. Compared with the conventional art of the meteorological cloud-chart, or isobaric chart, the climate image 411 and the climate statistics 421 collected by maritime climate information system 4 can provide users with more detailed information, which allows users to make more correct judgment.

Besides, the climate information platform can further comprise a data analysis device if necessary. The data analysis device is for analyzing the received climate images and climatic statistics of all ships. The analysis can comprise, for example, prediction for climate information in large marine areas, suggestion of analyzing ship channels, or estimation of navigation risks, etc. The climate information platform can transmit the analyzed results back to the first vehicle (the first ship) or the second vehicle (the second ship) via the said on-land network devices and the paths of transmitting maritime wireless signals.

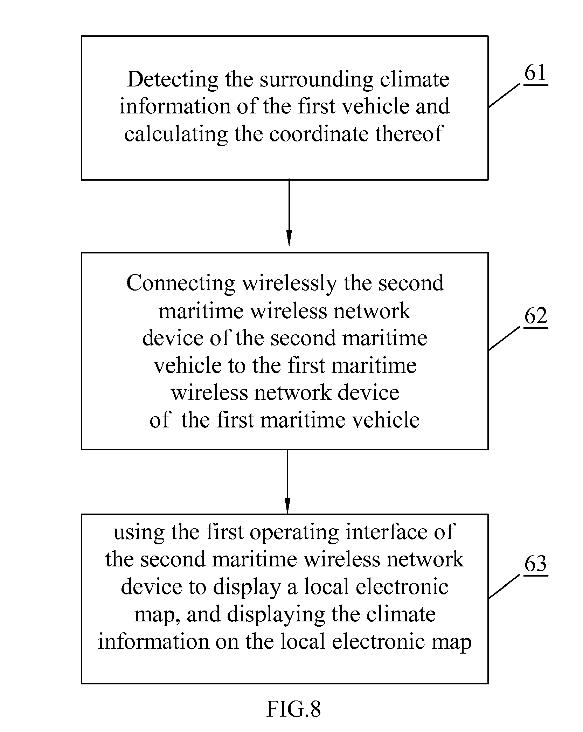

Figure 8 is a flow diagram of a method for collecting and processing maritime climate information according to a first embodiment of the present invention. The method comprises the following steps. In step 61, the detecting device and positioning device of the first vehicle are used to detect the surrounding climate information of the first vehicle and calculate the coordinate of the first vehicle. Preferably, the detecting device can comprise a camera or a meteorograph. Preferably, the positioning device can comprise a GPS device.

Next, in step 62, the second maritime wireless network device of at least one second maritime vehicle is used to wirelessly connect to the first maritime wireless network device of the first maritime vehicle for receiving the climate information and the coordinate. Preferably, the maritime vehicle can be a ship, a maritime platform or a floating maritime structure.

Finally, in step 63, a first operating interface of the second maritime wireless network device is used to display a local electronic map, and the climate information is displayed on this local electronic map. The maritime wireless device is preferred to comprise an antenna module, a plurality of circuit modules for receiving and transmitting signals, and a switch. The antenna module can be a directional antenna, a omni-directional antenna, or a combination of both. Preferably, the operation bandwidth of these antennas can cover 5175 MHz∼5875 MHz, for example, the antenna for WiFi communication, but this is just an example, not for limitation. The circuit module for receiving and transmitting signals can be an access point (AP). The switch can be a data link layer switch, also called a second layer switch. Preferably, the wireless signals transmission between the first maritime wireless network device 23 and the second maritime wireless network device 24 is operated with a wireless communication protocol, such as a WiFi communication protocol, a WiMAX communication protocol, a VHF communication protocol, or a UHF communication protocol.

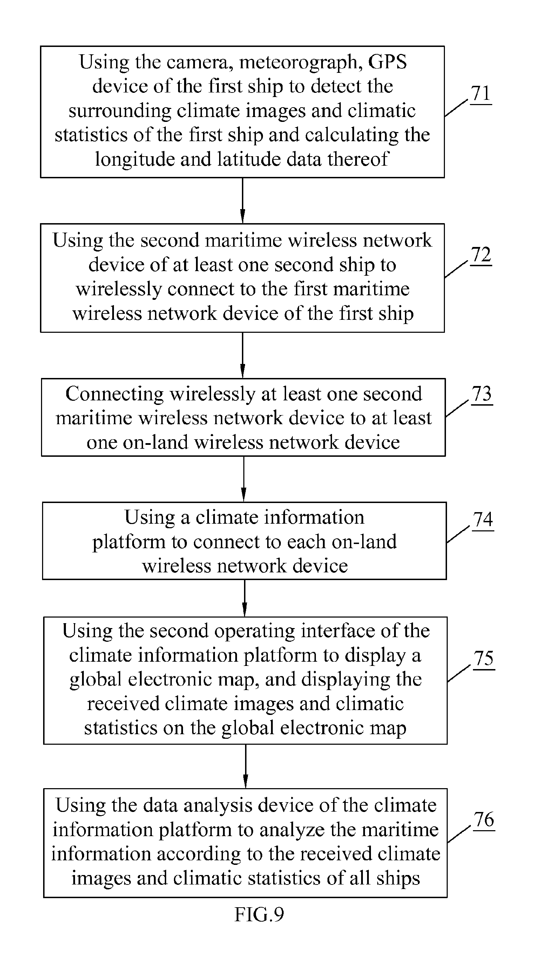

Figure 9 is a schematic diagram of a method for collecting and processing the maritime climate information according to a second embodiment of the present invention. In this drawing, this method comprises the following steps. In step 71, the camera, meteorograph, GPS device of the first ship are used to detect the climate images and climatic statistics surrounding the first ship and calculate the longitude and latitude data of the location of the first ship.

Next, in step 72, the second maritime wireless network device of at least one second ship is used to wirelessly connect to the first maritime wireless network device of the first ship for receiving the climate images, climatic statistics and the longitude and latitude data of the location of the first ship.

And then, in step 73, at least one second maritime wireless network device is wirelessly connected to at least one on-land wireless network device. The climate information, climatic statistics and coordinate are transmitted to each on-land wireless network device.

Next, in step 74, a climate information platform is used to connect to each on-land wireless network device for receiving the climate images, climatic statistics and the longitude and latitude data of the location of the first ship.

The climate information platform comprises a second operating interface. In step 75, a global electronic map is displayed on the second operating interface. The received climate images and climatic statistics are displayed on the place corresponding to the coordinate of the location of the first ship on the global electronic map. Preferably, the climate information platform can be a webpage server and the user can operate a networking device to connect to this webpage server via the Internet. Thereby, the user can operate the second operating interface and observe climate information on the browser.

In step 76, the data analysis device of the climate information platform is used to analyze the maritime information according to the received climate images and climatic statistics from all ships. The analysis can comprise, for example, prediction for climate information in large marine areas, suggestion of analyzing ship channels, or estimation of navigation risks. The analyzed results are transmitted back to the first ship or the second ship via the on-land network devices, the first maritime wireless network device, and the second maritime wireless network device.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A maritime climate information system (2, 4), comprising:
a detecting device (21) disposed on a first maritime vehicle (28) to detect climate information (211) around the first maritime vehicle (28);
a positioning device (22) disposed on the first maritime vehicle (28) to calculate a coordinate of the first maritime vehicle (28);
a first maritime wireless network device (23, 44) disposed on the first maritime vehicle (28) to transmit the climate information (211) and the coordinate (221); and
a plurality of second maritime wireless network devices (24, 45) disposed on different second maritime vehicles (29) respectively, and wirelessly connected to the first maritime wireless network device (23, 44) respectively to receive the climate information (211) and the coordinate (221).

2. The maritime climate information system of claim 1, wherein at least one of the second maritime wireless network devices (24, 45) further comprises a first operating interface (241, 451) for displaying a local electronic map (25) around the coordinate (221) based on the coordinate (221), and the climate information (211) at the coordinate (221) is displayed on the local electronic map (25).

3. The maritime climate information system of claim 1, wherein the second wireless network devices (24, 45) further connect to at least one on-land wireless network device (47), and the second maritime wireless network devices (24, 45) transmit the climate information (211) and the coordinate (221) to the on-land wireless network device (47) each.

4. The maritime climate information system of claim 3, further comprising a climate information platform (46) which has a connection with the on-land wireless network device (47) each, and receives the climate information (211) and the coordinate (221), wherein the climate information platform (46) comprises a second operating interface (461) to display a global electronic map (462), and the climate information (211) at the coordinate (221) is displayed on the global electronic map (462).

5. The maritime climate information system of claim 4, wherein the climate information platform (46) further comprises an information analyzing apparatus to analyze the maritime information according to the received climate information (211), and the analyzed results are transmitted back to the first maritime vehicle (28) or the second maritime vehicle (29).

6. The maritime climate information system of claim 2, wherein the second wireless network devices (24, 45) further connect to at least one on-land wireless network device (47), and the second maritime wireless network devices (24, 45) transmit the climate information (211) and the coordinate (221) to the on-land wireless network device (47) each.

7. The maritime climate information system of claim 6, further comprising a climate information platform (46) which has a connection with the on-land wireless network devicep (47) each, and receives the climate information (211) and the coordinate (221), wherein the climate information platform (46) comprises a second operating interface (461) to display a global electronic map (462), and the climate information (211) at the coordinate (221) is displayed on the global electronic map (462).

8. The maritime climate information system of claim 7, wherein the climate information platform (46) further comprises an information analyzing apparatus to analyze the maritime information according to the received climate information (211), and the analyzed results are transmitted back to the first maritime vehicle (28) or the second maritime vehicle (29).

9. The maritime climate information system of claim 1, wherein the detecting device (21) comprises a camera (41) for capturing the images around the first maritime vehicle (28) as the climate information (211).

10. The maritime climate information system of claim 1, wherein the first maritime wireless network device (23, 44) and the second maritime wireless network device (24, 45) transmit wireless data with a Real Time Protocol (RTP).

11. A method for collecting and processing maritime climate information, comprising steps of:
using a detecting device (21) and a positioning device (22) disposed on a first maritime vehicle (28) to detect respectively climate information (211) around the first maritime vehicle (28) and calculate the coordinate (221) of the first maritime vehicle (28); and
using at least one second maritime wireless network device (24, 45) of a second maritime vehicle (29) to wirelessly connect to a first maritime wireless network device (23, 44) of the first maritime vehicle (28) to receive the climate information (211) and the coordinate (221).

12. The method of claim 11, further comprising a step of:
using a first operating interface (241, 451) of the second maritime wireless network device (24, 45) to display a local electronic map (25), and displaying the climate information (211) at the coordinate (221) on the local electronic map (25).

13. The method of claim 11 , further comprising a step of:
wirelessly connecting the second maritime wireless network device (24, 45) to at least one on-land wireless network devicep (47), and transmitting the climate information (211) and the coordinate (221) to the on-land wireless network devicep (47) each.

14. The method of claim 13, further comprising a step of:
using a climate information platform (46) to connect with the on-land wireless network devicep (47) each for receiving the climate information (211) and coordinate (221), wherein the climate information platform (46) comprises a second operating interface (461) to display a global electronic map (462), and the climate information (211) at the coordinate (221) is displayed on the global electronic map (462).

15. The method of claim 14, further comprising a step of:
analyzing the maritime and climate information on the climate information platform (46) according to the received climate information (211), and transmitting the analyzed results back to the first maritime vehicle (28) or the second maritime vehicle (29).

16. The method of claim 12, further comprising a step of:
wirelessly connecting the second maritime wireless network device (24, 45) to at least one on-land wireless network devicep (47), and transmitting the climate information (211) and the coordinate (221) to the on-land wireless network devicep (47) each.

17. The method of claim 16, further comprising a step of:
using a climate information platform (46) to connect with the on-land wireless network devicep (47) each for receiving the climate information (211) and coordinate (221), wherein the climate information platform (46) comprises a second operating interface (461) to display a global electronic map (462), and the climate information (211) at the coordinate (221) is displayed on the global electronic map (462).

18. The method of claim 17, further comprising a step of:
analyzing the maritime and climate information on the climate information platform (46) according to the received climate information (211), and transmitting the analyzed results back to the first maritime vehicle (28) or the second maritime vehicle (29).

19. The method of claim 11, wherein the detecting device (21) comprises a camera (41) for capturing the images around the first maritime vehicle (28) as the climate information (211).

20. The method of claim 11, wherein the first maritime wireless network device (23, 44) and the second maritime wireless network device (24, 45) transmit wireless data with a Real Time Protocol (RTP).
